Europäisches Patentamt

European Patent Office

Office européen des brevets

(19)

(11) Publication number: **0 173 533 B1**

(12) **EUROPEAN PATENT SPECIFICATION**

(45) Date of publication of patent specification: **29.05.91** (51) Int. Cl.5: **G11B 7/007**

(21) Application number: **85305895.6**

(22) Date of filing: **19.08.85**

(54) An optical memory device.

(30) Priority: **20.08.84 JP 174736/84**

(43) Date of publication of application:
**05.03.86 Bulletin 86/10**

(45) Publication of the grant of the patent:
**29.05.91 Bulletin 91/22**

(84) Designated Contracting States:
**DE FR GB IT**

(56) References cited:
**EP-A- 0 100 995        EP-A- 0 108 258**
**EP-A- 0 132 137        AT-B- 367 229**
**DE-A- 3 131 212        DE-A- 3 342 748**
**US-A- 4 423 502        US-A- 4 455 632**

**Proceedings of SPIE,Vol421,June
8-9,1983,pages 86,87.**

(73) Proprietor: **SHARP KABUSHIKI KAISHA
22-22 Nagaike-cho Abeno-ku
Osaka 545(JP)**

(72) Inventor: **Fujii, Yoshikazu
6-36, 2-chome, Chiyogaoka
Nara-shi Nara-ken(JP)**
Inventor: **Inui, Tetsuya
14, Inyo-cho
Nara-shi Nara-ken(JP)**
Inventor: **Deguchi, Toshihisa C-722 Daiya
Heights Gakuenmae
2-200-5, Gakuendaiwa-cho
Nara-shi Nara-ken(JP)**
Inventor: **Ohta, Kenji
414 Shiki-Mansion 89-1, Oaza-Futamata
Yao-shi Osaka(JP)**

(74) Representative: **Billington, Lawrence Emlyn et
al
HASELTINE LAKE & CO Hazlitt House 28
Southampton Buildings Chancery Lane
London WC2A 1AT(GB)**

## Description

This invention relates to an optical memory device which conducts at least one of the recording operation, the regenerating operation, or the erasing operation of information by means of light.

Examples of such devices are shown in EP-A-100995 which discloses a purely optical write-once memory device according to the preamble of claims 1 and 2, wherein the preferred value of the depth of the guide tracks is $\lambda/8$.

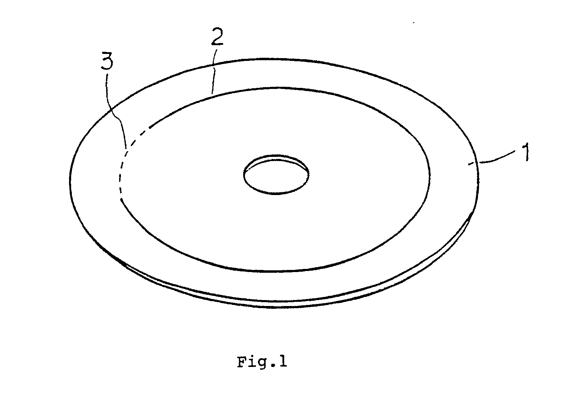

Optical memory devices have come to public notice as a dense and mass memory device. They can be classified into three groups of regenerative memory devices, additional recording permit memory devices and rewrite permit memory devices. Optical memory devices, which can be classified into additional recording permit memory devices and rewrite permit memory devices, generally have guide tracks to guide a light beam for recording and/or regenerating information to a given portion of the optical memory devices. A portion of each of the guide tracks can be formed into a pit-shape, resulting in a track address. For example, the optical memory disk shown in Figure 1 comprises a substrate 1 and a plurality of guide tracks and track addresses 2 and 3, both of which are concentrically or spirally formed on the substrate 1. (A single guide track 2 and a single track address 3 are only illustrated herein for easy understanding.)

EP-A-0108258 discloses a master-disk for producing an optical disc in which the track address pits are formed actually in the bottoms of the guide tracks.

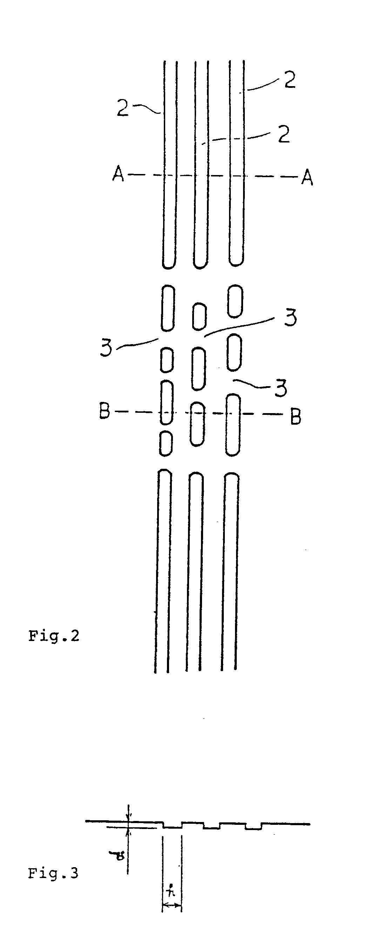

Figures 2 and 3 show the guide tracks 2 and the track addresses 3. The depth d of the guide tracks 2 is selected to be $\lambda/8n$ to maximize the quantity of tracking servo signal, while the depth d of the track addresses 3 is selected to be $\lambda/4n$ to maximize the quantity of track address signal, wherein $\lambda$ is the wavelength of laser light, etc., used for the optical memory device and n is the refraction index of the portions of the guide tracks 2 and/or the track addresses 3 of the substrate 1.

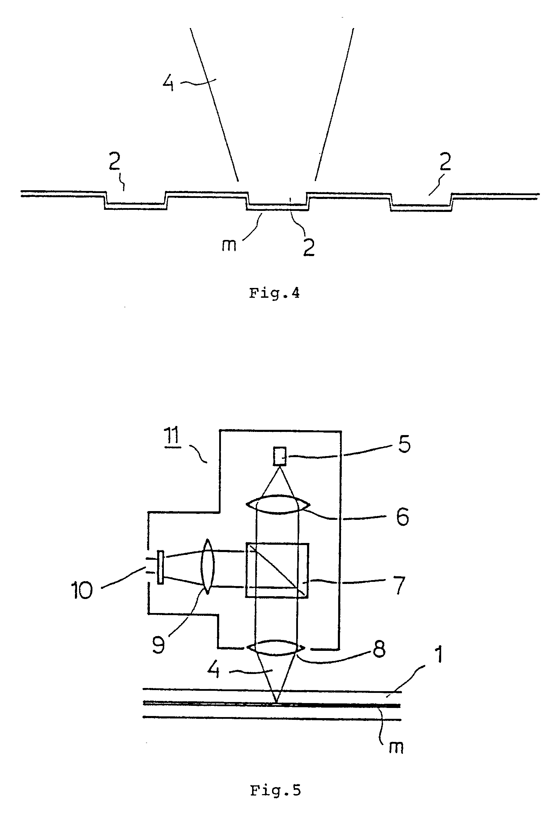

Figure 4 shows a recording medium layer m on the substrate 1. A laser beam 4 is radiated in a spot fashion to the recording medium layer m, resulting in a variation in the reflectivity of the recording medium layer m. The variation is retained thereon as a record of information based on the laser beam 4. When the laser beam 4 is later radiated in a spot fashion to the recording medium layer m in the same manner as the above-mentioned, the variation can be read out and regenerated as a signal.

The conventional shape of the guide tracks 2, which is determined in such a manner to maximize the quantity of the tracking servo signal, is not necessarily advantageous for recording and/or regeneration of information. For instance, a regeneration signal from the recording medium layer m on a flat substrate having no guide tracks 2 has a more excellent quality than that from the recording medium layer m on a rugged substrate having guide tracks 2, because, although the guide tracks allows for an increase in the quantity of signal, the edges of the guide tracks cause noise in the signal. Since the guide tracks are essential to optical memory devices, which are of additional recording permit memory and/or rewrite permit memory types, noise due to the shape of the guide tracks must be minimized and the quantity of signal therefrom must be maximized.

On the other hand, the shape of the track addresses 3 (shown in Figure 2) is determined taking into consideration both the ease or difficulty of the formation thereof and the quantity or quality of address signal, and thus the depth d thereof is not necessarily required to be $\lambda/4n$.

EP-A-100995 which discloses a purely optical write-once memory device according to the preamble of claims 1 and 2, wherein the preferred value of the depth of the guide tracks $\lambda/8$.

According to one aspect of the present invention there is provided an optical memory device comprising a substrate, guide tracks formed on said substrate and pit-shaped track addresses extending in-line with respective ones of the guide tracks, wherein the pit-shaped track addresses are formed outside the guide tracks and the depth d of the guide tracks from the surface of the substrate is equal to the depth d' of the pit-shaped track addresses from the surface of the substrate, characterised in that the optical memory device is a magneto-optical rewrite permit memory device and said depth is in the range from $\lambda/24n$ to $\lambda/12n$, wherein $\lambda$ is the wavelength of laser light used for the optical memory device and n is the refraction index of the guide track portions and of the track address portions on the substrate.

According to another aspect of the present invention there is provided an optical memory device comprising a substrate, guide tracks formed on said substrate and pit-shaped track addresses extending in-line with respective ones of the guide tracks, wherein the pit-shaped track addresses are formed outside the guide tracks, characterised in that the optical memory device is a magneto-optical rewrite permit memory device and the depth d of the guide tracks from the surface of the substrate is in the range from $\lambda/24n$ to $\lambda/12n$ and the depth d' of the pit-shaped track addresses from the surface of the substrate is in the range from $\lambda/8n$ to $\lambda/4n$, wherein $\lambda$ is the wavelength of laser light used for the optical memory device and n is the

2

refraction index of the guide track portions and of the track address portions on the substrate.

The width **h** of said guide tracks is, in a preferred embodiment, in the range of **0.5** · λ/NA to **0.7** · λ/NA, where in **NA** is the numerical aperture of an objective lens for condensing the laser light on the optical memory device.

The width **h'** of said pit-shaped track addresses is, in a preferred embodiment, in the range of **0.18** · λ/NA to **0.38** · λ/NA.

Embodiments of the present invention may have the advantages of (1) providing an optical memory device wherein the shape of the guide tracks of the substrate is improved, resulting in an excellent quality recording and/or regeneration signal; (2) providing an optical memory device wherein the shape of the pit-shaped track addresses is improved, resulting in an excellent quality track address signal; and (3) providing an optical memory device which can be readily manufactured.

Embodiments of the invention may be better understood and its numerous advantages will become apparent to those skilled in the art by reference to the accompanying drawings as follows:

Figure **1** is a schematic illustration showing the guide track portion and the track address portion formed in an optical memory device.

Figure **2** is an enlarged plane view of the guide track portion and the track address portion.

Figure **3** is a sectional view of the guide track portion and the track address portion at the line A-A and B-B, respectively, in Figure **2**.

Figure **4** is an enlarged sectional view of the guide track portion and the track address portion in Figure **3**.

Figure **5** is a schematic illustration showing the optical relationship between the optical head and the optical memory device.

Figure **6** is a schematic illustration showing the optical relationship between the objective lens and the incident laser light in a spot fashion to the optical memory device.

Figures **7(a)**, **7(b)** and **7(c)**, respectively, are views showing the intensity distribution of the reflected light from the optical memory device in a variety of conditions.

Figures **8(a)** and **8(b)**, respectively, are graphs showing the relationship between the quantity of reflected light within the aperture of the objective lens and the shape of the guide tracks.

Figures **9(a)** and **9(b)**, respectively, are graphs showing the relationship between the sensitivity of the tracking servo signal and the shape of the guide tracks.

Figures **10(a)** and **10(b)**, respectively, are graphs showing the relationship between the shape of the guide tracks and the noise resulting therefrom.

Figure **5** shows the optical relationship between the optical head for recording and regenerating information and the optical memory device. The optical head **11** comprising a laser light source **5**, a collimating lens **6**, a half prism **7**, an objective lens **8**, a condensing lens **9**, a detector **10** and other necessary optical elements (not shown) emits the laser light **4** in a spot fashion through the objective lens **8** to a given portion of the recording medium layer **m** of the optical memory device, thereby attaining a record (or an erasion) of information thereon. When a given portion of the optical memory device is radiated by the laser light **4** in a spot fashion from the optical head in the same manner as the above-mentioned and the resulting reflected light comes into the detector **10** through the objective lens **8**, the half prism **7** and the condensing lens **9**, information can be read out from the recording in the optical memory device, thereby attaining a regeneration of information.

Tracking servo signal and track address signal, which serve as an indication as to whether or not a given portion of the recording medium layer **m** of the optical memory device is precisely radiated by the laser light spot **4**, are described below:

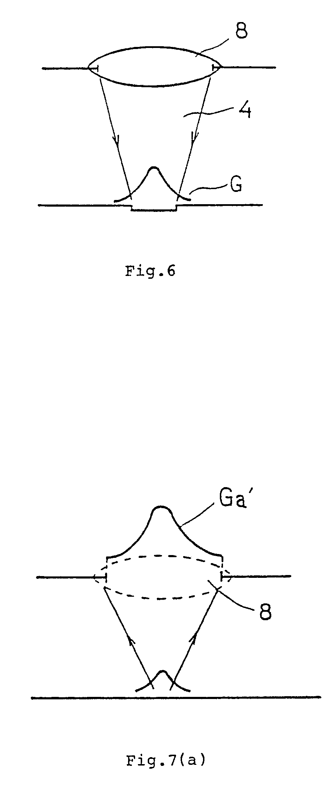

When the intensity distribution of an incident light in the aperture of the objective lens **8** exhibits the Gaussian distribution, the intensity distribution **G** of a light spot at the focus of the objective lens **8** also indicates approximately the Gaussian distribution, as shown in Figure **6**, which is represented by the following equation:

$$i(r) = i_0 \cdot \exp(-2 \cdot r \cdot {}^2/r_0^2)$$

wherein $r_0$ is the radius in the case where the light intensity is equal to $1/e^2$

$$i(r_0)$$

times the light intensity $i_0$ at the center.

$$r_0 = t_0/\pi \cdot \lambda/NA$$

wherein $\lambda$ is the wavelength of laser light, **NA** is the numerical aperture and $t_0$ is the value to be determined depending upon the relationship between the radius of the intensity distribution (Gaussian distribution) of an incident light in the aperture of the objective lens **8** and the numerical aperture **NA** of the objective lens **8**. The value $t_0$ in the optical system of the optical head **11** is usually in the range of **1.2** to **1.4**.

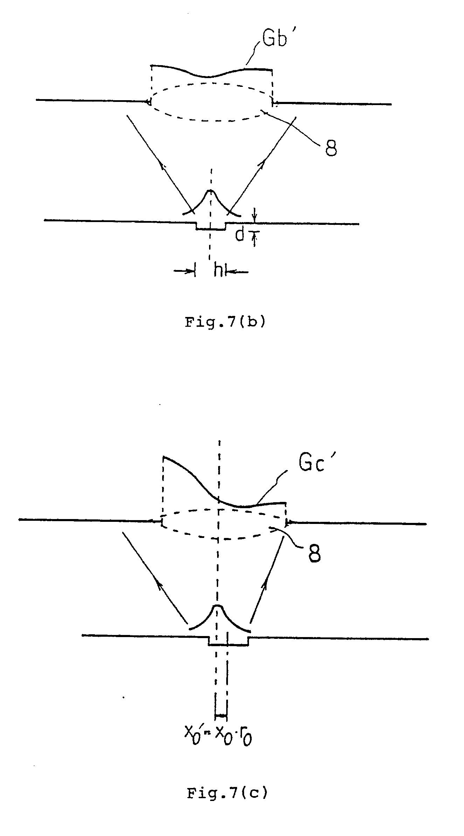

Figure **7(a)** indicates that the intensity distribution of the reflected light, at the time when a light spot is radiated to a flat face, approximately exhibits the Gaussian distribution. Figure **7(b)** indicates that the intensity distribution of the reflected light, at the time when a light spot is radiated to the center portion of a channel such as a guide track, exhibits the intensity distribution enlarged in the direction at right angles to the guide track under the influence of light diffraction due to the channel. Figure **7(c)** indicates that the intensity distribution of the reflected light, at the time when a light spot is radiated to a portion other than the center portion (e.g., the left with regard to the center) of a channel such as a guide track, is asymmetrical which is displaced to the left.

The difference between the left and the right of such as asymmetrical light intensity as shown in Figure **7(c)** is detected as a tracking servo signal by the use of a pair of detectors **10** shown in Figure **5**.

The tracking servo signal is zero for such a symmetrical light intensity as shown in Figure **7(b)** wherein a light spot reaches the center of the guide track, while it exhibits a plus( + ) or minus(-) output depending upon the displaced direction as shown in Figure **7(c)**.

The reflected light from the channel shown in Figure **7(b)** spreads in the lateral direction due to diffraction, and thus the quantity of the reflected light entering the detector **10** through the aperture of the objective lens **8** is less than that of the reflected light from such a flat face as in Figure **7(a)**. The difference in quantity between the reflected lights is exhibited as a track address signal. Accordingly, when the guide track containing a pit-shaped track address portion is scanned with a light spot, the reflected light therefrom repeatedly exhibits such a specific light intensity distribution as shown in Figures **7(a)** and **7(b)**, respectively, so that a variation in the quantity of the reflected light can be detected as a pit column.

As seen from the above description of the tracking servo signal and the track address signal, the recording and regeneration of information can be carried out by detecting optical variation in the recording medium layer within the guide tracks as a variation in the intensity of the reflected light therefrom. The diffraction of the reflected light varies with a variation in the shape of the tracks, causing a variation in the quantity of the reflected light entering the detector which results in the aforementioned noise.

The relationship between the quantity of the signal and the shape of the guide tracks is described below:

When a laser light spot having a radius of $r_0$ reaches a flat face (given that the intensity distribution **G** of the light spot is the Gaussian distribution and the light intensity at the radius $r_0$ of the light spot is equal to $1/e_2$ times the light intensity at the center), the quantity $I_0$ of the reflected light entering the aperture of the objective lens **8** (the numerical aperture thereof being **NA**) can be represented by the following equation:

$$I_0 = 1 - e^{-2t}0$$

wherein the quantity of light $I_0$ is 1 if the whole of the reflected light enters the aperture of the objective lens **8**. Since $t_0$, which is in range of **1.2** to **1.4**, can be represented by the following equation, $I_0$ must be in the range of **0.94** to **0.95**:

$$t_0 = r_0/[\lambda/( \pi \cdot NA)]$$

When a laser light spot having a radius of $r_0$ reaches a channel such as the guide track portion and the pit-shaped track address portion, as shown in Figure **7(b)**, the quantity D of the reflected light entering the aperture of the objective lens **8** can be represented by the following equation, which is standardized by the quantity $I_0$ of the reflected light from a flat face:

$$D = 1 - 1/(I_0) \cdot \mathbf{D(d)} \cdot \mathbf{H(h)}$$

wherein **d** is the depth of the tracks (the optical depth thereof being **nd** when the refraction index of the substrate is **n)** and **h** is the width of the tracks.

In the above-mentioned equation, **D(d)** is a function of the depth and **H(h)** is a function of the width, both of which can be represented by the following equations, respectively:

$$D(d) = 1 - \cos(4\pi\delta) \quad ; \quad \delta = \frac{nd}{\lambda}$$

$$H(h) = \frac{4}{\pi} \int_0^{2\pi} \int_0^{t_0} e^{-2\omega^2} \cdot \omega \cdot F(1-F) \, d\omega d\theta$$

$$F = \int_{-s}^{s} \frac{1}{\sqrt{\pi}} e^{-(x+i \cdot \omega \cdot \cos\theta)^2} \, dx$$

$$; \quad s = \frac{h}{2r_0} = \frac{h}{\dfrac{2t_0 \cdot \lambda}{\pi \cdot NA}}$$

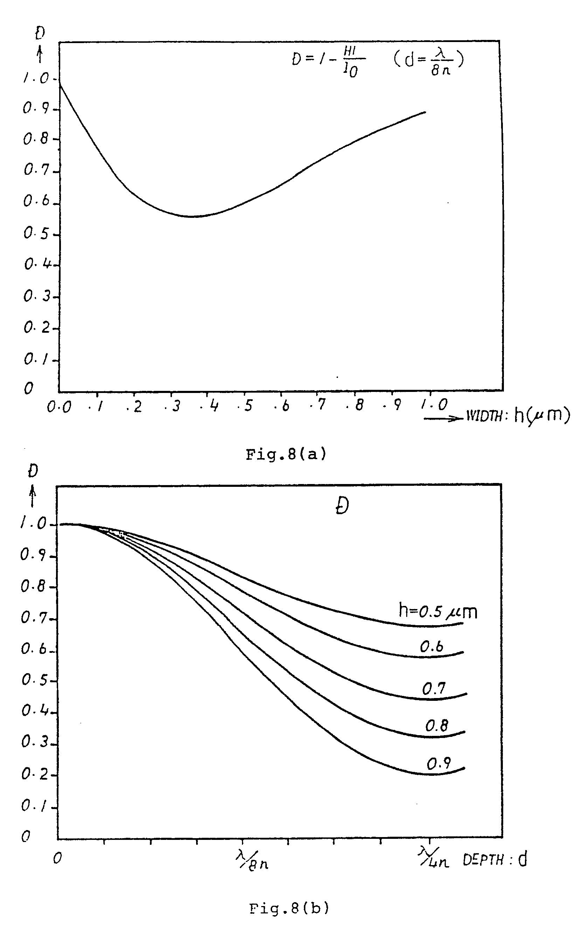

Figure **8(a)** shows the relationship between the quantity D of the reflected light entering the aperture and the width **h** of the tracks in the case where $d = \lambda/8n$ ( $\delta = 1/8$), namely **D(d)** = 1 and $D = 1 - H/I_0$, wherein $\lambda = 0.78 \, \mu m$, NA = 0.6, $r_0 = 0.55 \, \mu m$ and $t_0 \fallingdotseq 1.33$. Figure **8(a)** indicates that the quantity D of light is minimized when **h** is in the range of **0.23** to **0.5** $\mu m$, namely, **h** is in the range of $0.18 \cdot \lambda/NA$ to $0.38 \cdot \lambda/NA$ and it increases as the width exceeds the above-mentioned value (i.e., $0.27 \cdot \lambda/NA$).

Figure **8(b)** shows the relationship between the quantity D of light and the depth of the tracks in the case where h = **0.5, 0.6, 0.7, 0.8** and **0.9**, respectively, wherein $\lambda = 0.78 \, \mu m$, NA = **0.6**, $r_0 = 0.55 \, \mu m$ and $t_0 \fallingdotseq 1.33$. It indicates that the quantity D of light decreases as the depth becomes greater and the quantity D is minimized when the depth **d** is $\lambda/4n$.

Since the quantity of information signal in the tracks increases with an increase in the quantity of light, the quantity of signal increases with a greater width **h** of the tracks or a lesser depth **d** of the tracks.

The quantity **Tn** of track address signal is detected by repeatedly scanning the pit-shaped track channels and the flat portions with a light spot, and can be represented by a difference in the quantity of the reflected light in the aperture of the objective lens between the cases shown in Figures **7(a)** and **7(b)**.

$$Tn = 1 - D = 1/I_0 \cdot D(d) \cdot H(h)$$

As seen from the foregoing description the quantity **Tn** of the track address signal is maximized when the width **h'** of the pit is in the range of $0.18 \cdot \lambda/NA$ to $0.38 \cdot \lambda/NA$ (it exhibits the maximum value when the width **h'** is $0.27 \cdot \lambda/NA$), while it is reduced as the width **h'** becomes great. The quantity **Tn** is also maximized when the depth **d'** of the pit is $\lambda/4n$, while it is reduced as the depth **d'** becomes less.

As shown in Figure **7(c)**, the intensity distribution **G'** of the reflected light, at the time when a laser light spot reaches a portion at the distance $x_0'$ ( $= r_0 \cdot x_0$) from the center of the track, is displaced to the left at

5

the distance $x_0'$ from the center of the track. When the quantity of light is divided into two parts at the center of the aperture of the objective lens 8, the difference in the quantity of light between the left and the right with regard to the center of the aperture is proportional to the displacement $x_0$ (wherein $x_0$ is small than 1). By detecting this difference in the quantity of light, which is represented by the following equation the tracking servo signal can be obtained:

$$\Delta I = i \cdot \sin(4\pi\delta) \cdot \frac{4}{\pi} \int_0^\pi \int_0^{t_0} e^{-2\omega^2} \cdot \omega$$

$$(F^+ - F^-) d\omega d\theta$$

$$\left( \begin{array}{l} F^+ = \int_{-s+x_0}^{s+x_0} \frac{1}{\sqrt{\pi}} e^{-(x+i\omega\cos\theta)^2} dx \\ \\ F^- = \int_{-s-x_0}^{s-x_0} \frac{1}{\sqrt{\pi}} e^{-(x+i\omega\cos\theta)^2} dx \end{array} \right.$$

Thus, the sensitivity **Ts** of the difference $\Delta I$ in the quantity of light based on the displacement $x_0$, at the time when the light spot reaches the portion at the distance $x_0$ from the center of the track, can be represented by the following equation:

$$Ts = \frac{\partial(\Delta I)}{\partial x_0} \bigg|_{x_0 = 0}$$

$$Ts = \sin(4\pi\delta) \cdot \frac{4}{\pi} \int_0^\pi \int_0^{t_0} e^{-2\omega^2} \cdot \omega \cdot G d\omega d\theta$$

$$G = \frac{4}{\sqrt{\pi}} e^{-s^2 + \omega^2\cos^2\theta} \cdot \sin(2s\omega \cdot \cos\theta)$$

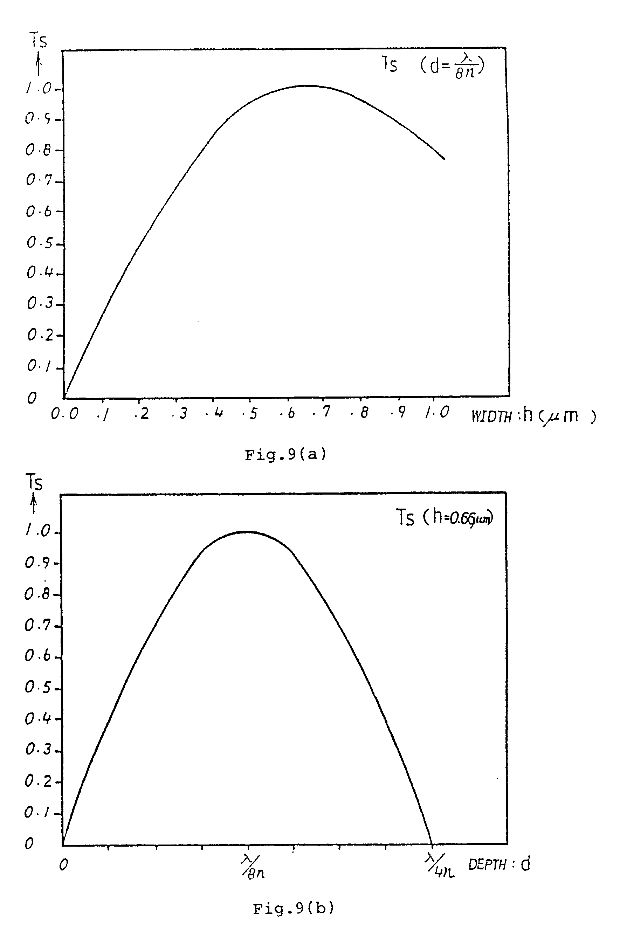

Figure **9(a)** shows the relationship between the sensitivity **Ts** of the tracking servo signal and the width **h** of the tracks in the case where d = $\lambda$/8n ( $\delta$ = 1/8), wherein $\lambda$ = **0.78** $\mu$m, NA = **0.6**, $r_0$ = **0.55** $\mu$m and $t_0 ≒$ 1.33. The sensitivity **Ts** of the tracking servo signal is zero when the width **h** of the tracks is zero. The sensitivity **Ts** increases with an increase in the width **h** and it is maximized when **h** is nearly equal to **0.66** $\mu$m, while it decreases as the width exceeds **0.66** $\mu$m. When **h** is in the range of 0.45 to **0.9** $\mu$m, namely approximately **0.35**$\cdot\lambda$/NA to 0.7.$\lambda$/NA, the sensitivity **Ts** is maintained at the level of **0.9** times the maximum value.

Figure **9(b)** shows the relationship between the sensitivity **Ts** of tracking servo signal and the depth **d** of the tracks in the case where h = **0.66** $\mu$m, wherein $\lambda$ = **0.78** $\mu$m, NA = **0.6**, $r_0$ = **0.55** $\mu$m and $t_0 ≒$ **1.33**. It indicates that the sensitivity **Ts** is a sine function of **d** and is maximized when d = $\lambda$/8n ( $\delta$ = 1/8).

Thus, it is advantageous for the tracking servo signal that the width **h** of the tracks be set in the range

of $0.35 \cdot \lambda/NA$ to $0.68 \cdot \lambda/NA$ and the depth **d** of the tracks be set to be $\lambda/8n$.

As mentioned above, the actual guide tracks are not formed with a structure having geometrically straight lines and/or curves, but microscopically have a varied and ununiform structure. When the guide tracks are scanned with a light spot, the varied shape thereof causes a variation in diffraction, resulting in a variation in the quantity of the reflected light in the aperture of the objective lens.

Given that a variation in the edge portion of the tracks is the variation $\Delta h$ in the track width, the variation $\Delta D$ in the quantity of light therein can be represented by the following equation:

$$\Delta D = \partial D/\partial h \cdot \Delta h$$

wherein $\partial D/\partial h$ is the rate of a variation $\Delta D$ in the quantity of the reflected light in the aperture to a variation $\Delta h$ in the track width and indicates the rate at which the variation in the track shape appears as a noise in a regenerated light. Thus, if the relationship between the $\partial D/\partial h$ value and the shape of the tracks (i.e., d and h) becomes clear, it will be clear which shape of the tracks can minimize the quantity of noise resulting from the track shape.

Since $D = 1 - 1/I_0 \cdot D(d) \cdot H(h)$ as indicated in the Item (2.2),

$$\partial D/\partial h = -1/I_0 \cdot D(d) \cdot H(h).$$

wherein

$$H'(h) = \frac{1}{2 r_0} \cdot \frac{4}{\pi} \int_0^{2\pi} \int_0^{t_0} e^{-2\omega^2} \cdot$$

$$\omega \left(1 - 2F\right) \cdot \frac{\partial F}{\partial s} \, d\omega d\theta$$

$$\partial F/\partial s = 2/\sqrt{\pi} \cdot e^{\omega^2 \cos^2\theta - s^2} \cdot \cos(2s\omega \cdot \cos\theta)$$

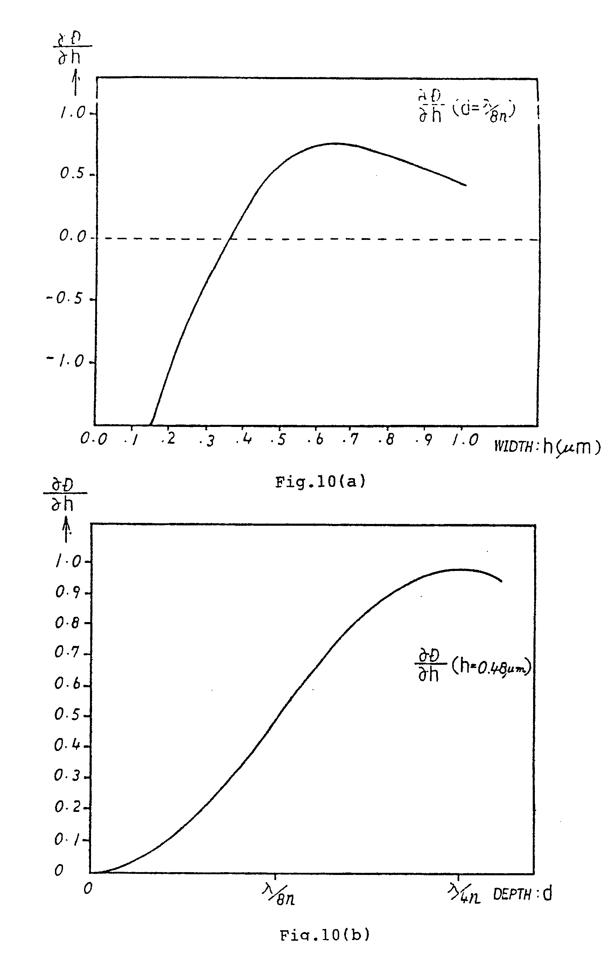

Figure **10(a)** shows the relationship between the $\partial D/\partial h$ value and the width **h** of the tracks in the case where $d = \lambda/8n$ ($\delta = 1/8$), wherein $\lambda = 0.78 \ \mu m$, $NA = 0.6$, $r_0 = 0.55 \ \mu m$ and $t_0 = 1.33$. The rate $\partial D/\partial h$ at which noise appears based on the shape of the tracks is minimized (i.e., nearly equal to zero) when $h = 0.35 \ \mu m$ ($h = 0.27 \cdot \lambda/NA$), and the positive or negative sign of the $\partial D/\partial h$ value is reversed whenever the width **h** is greater or less than approximately $0.35 \ \mu m$. The $\partial D/\partial h$ value is maximized when $h = 0.65 \ \mu m$ ($h = 0.5 \cdot \lambda/NA$), while it is reduced as the width **h** becomes greater than approximately $0.65 \ \mu m$.

Figure **10(b)** shows a curve illustrating the relationship between the $\partial D/\partial h$ value and the depth **d** of the tracks. The curve is of a cos function which is maximized when $d = \lambda/4n$ ($\delta = 1/4$), and indicates that the less the depth **d** is in the range of 0 to $\lambda/4n$, the smaller the $\partial D/\partial h$ value becomes.

The above-mentioned discussion makes clear the relationship of the quantity of signal and noise with the shape of the tracks. The main object of this invention is to increase the quantity of information signal **(S)** and to decrease the quantity of noise **(N)** resulting from the shape of the tracks, resulting in an increase in the ratio of **S** to **N**, thereby providing an optical memory device which can produce record and/or regeneration signal having an excellent quality. For that purpose, the depth **d** of the tracks is required to be less than $\lambda/8n$ notwithstanding the fact that the tracking servo signal are maximized when $d = \lambda/8n$. More particularly, the less the depth **d**, the more the **S/N** ratio increases.

The optimum shape of the tracks in each specific optical memory device can be determined as follows, depending upon the reflectivity of the recording medium layer and the formation necessity of the pit-shaped track address portion:

(i) For optical memory devices used for the recording of information based on variation in the reflectivity of the recording medium layer, the formation of pits, or the Kerr effect, the depth d of the tracks must be in the range of $\lambda/12n$ to $\lambda/48n$, which is determined by experimental data showing that the sensitivity of the tracking servo signal detected by the reflectivity of the recording medium layer is high enough (i.e., in the range of about **0.87** to **0.26** times in the case where the depth is $\lambda/8n$). The quantity of the reflected light in the aperture of the objective lens at the time when the depth is in the above-mentioned range, is in the range of about **1.2** to **1.4** times that of the case where the depth is $\lambda/8n$, and noise resulting from the shape of the tracks is in the range of about **0.5** to **0.03** times that of the case where the depth is $\lambda/8n$, resulting in excellent quality information signal.

(ii) For optical memory devices having guide tracks, a part of which is formed into pit-shaped track addresses, the quantity of track address signal is in the range of **0.5** to **0.13** times and **0.13** to **0.03** times that of the case where the depth d is $\lambda/8n$, respectively, when the depth d is in the range of $\lambda/12n$ to $\lambda/24n$ and $\lambda/24n$ to $\lambda/48n$. The formation of the guide track portion and the track address portion, the depths of both which are different from each other, is troublesome and expensive. Accordingly, in the case where the optical memory devices allow for an additional quantity of tracking address signal (for instance, the recording medium layer in each of the devices has a reflectivity which is the same as or greater than that described in Item **(i)**), the track address signal can be read out to the extent of about **0.13** times those at the time when the depth is $\lambda/8n$, and thus the depth d of the guide tracks is preferably equal to that of the track addresses with the range of $\lambda/12n$ to $\lambda/24n$, if the ready formation thereof is required. The quantity of the reflected light in the aperture at the time when the depth is in the above-mentioned range, is in the range of about **1.2** to **1.37** times that of the case where the depth is $\lambda/8n$, and noise due to the shape of the tracks is in the range of about **0.5** to **1.3** times that of the case where the depth is $\lambda/8n$, resulting in excellent quality information signal.

(iii) For optical memory devices having guide tracks, a part of which is formed into pit-shaped trick addresses, and having a recording medium layer with the reflectivity which is the same as or less than that described in Item **(i)**, the depth d' of the pit-shaped track address portion is preferably greater than $\lambda/8n$ where the quantity of the track address signal is critical even though the formation of the tracks is complicated. In light of the fact that the quantity of the track address signal is maximized when the depth d' is $\lambda/4n$ and the quantity thereof is reduced as the depth becomes greater, the depth d' of the pit-shaped track address portion is preferably in the range of $\lambda/8n$ to $\lambda/4n$, wherein the quantity thereof is in the range of **1** to **2** times that at the time when the depth d' is $\lambda/8n$.

(iv) The width h of the guide tracks is preferably in the range of **0.5**$\cdot$ $\lambda/NA$ to **0.7**$\cdot\lambda/NA$ in light of the fact that the quantity of the tracking servo signal is maximized when h = **0.5**$\cdot$ $\lambda/NA$, the quantity thereof is about **0.9** times the maximum value thereof when **h** is in the range of **0.35** $\lambda/NA$ to **0.7** $\lambda/NA$, noise due to the shape of the tracks is reduced when **h** is **0.5**$\cdot$ $\lambda/NA$ or greater, and the quantity of the reflected light in the aperture of the objective lens increase as **h** exceeds **0.27**$\cdot$ $\lambda/NA$.

(v) The quantity of the track address signal is maximized when the width h' of the pit-shaped track address portion is **0.27**$\cdot$ $\lambda/NA$, while noise due to the shape of the tracks is minimized when the width h' is the same as the above-mentioned. The quantity of the track address signal is about **0.9** times the maximum value thereof when the width h' of the tracks is in the range of **0.18**$\cdot$ $\lambda/NA$ to **0.38**$\cdot$ $\lambda/NA$, which is preferably selected for the width h' if the pit-shaped track address portion alone were required to have a narrower width than the other guide track portion to result in improved quality track address signal.

The shape of the tracks in this invention is not limited to the edges which rise steeply as shown in Figures **3**, **4**, **7(b)** and **7(c)**, but contains either oblique or curved edges.

## Claims

1. An optical memory device comprising a substrate (1), guide tracks (2) formed on said substrate (1) and pit-shaped track addresses (3) extending in-line with respective ones of the guide tracks (2), wherein the pit-shaped track addresses (3) are formed outside the guide tracks (2) and the depth d of the guide tracks (2) from the surface of the substrate (1) is equal to the depth d' of the pit-shaped track addresses (3) from the surface of the substrate (1), characterised in that the optical memory device is a magneto-optical rewrite permit memory device and said depth is in the range from $\lambda/24n$ to $\lambda/12n$, wherein $\lambda$ is the wavelength of laser light used for optical memory device and n is the refraction index of the guide track portions and of the track address portions on the substrate (1).

EP 0 173 533 B1

2. An optical memory device comprising a substrate (1), guide tracks (2) formed on said substrate (1) and pit-shaped track addresses (3) extending in-line with respective ones of the guide tracks (2), wherein the pit-shaped track addresses (3) are formed outside the guide tracks (2), characterised in that the optical memory device is a magneto-optical rewrite permit memory device and the depth d of the guide tracks (2) from the surface of the substrate (1) is in the range from $\lambda/24n$ to $\lambda/12n$ and the depth d' of the pit-shaped track addresses (3) from the surface of the substrate (1) is in the range from $\lambda/8n$ to $\lambda/4n$, wherein $\lambda$ is the wavelength of laser light used for the optical memory device and n is the refraction index of guide track portions and of the track address portions on the substrate (1).

3. An optical memory device according to claim 1 or 2, wherein the width h of said guide tracks (2) is in the range from 0.5 $\lambda/NA$ to 0.7 $\lambda/NA$, wherein NA is the numerical aperture of an objective lens adapted for condensing laser light on the optical memory device.

4. An optical memory device according to claim 1 or 2, wherein the width h' of said pit-shaped track addresses (3) is in the range from 0.18 $\lambda/NA$ to 0.38 $\lambda/NA$, wherein NA is the numerical aperture of an objective lens adapted for condensing laser light on the optical memory device.

**Revendications**

1. Dispositif de mémoire optique comportant un substrat (1), des pistes de guidage (2) formées sur ledit substrat (1) et des adresses (3) sur piste en forme de trous, s'étendant dans l'alignement des pistes de guidage (2) respectives, étant précisé que les adresses (3) sur piste en forme de trous sont formées en dehors des pistes de guidage (2) et étant précisé que la profondeur d des pistes de guidage (2) à partir de la surface du substrat (1) est égale à la profondeur d' des adresses sur piste (3) en forme de trous à partir de la surface du substrat (1), caractérisé par le fait que le dispositif de mémoire optique est un dispositif de mémoire magnéto-optique autorisant la réécriture et par le fait que ladite profondeur est dans la plage de $\lambda/24n$ à $\lambda/12n$ où $\lambda$ est la longueur d'onde du faisceau laser utilisé pour le dispositif de mémoire optique et n est l'indice de réfraction des portions formant piste de guidage et des portions formant adresse sur piste sur le substrat (1).

2. Dispositif de mémoire optique comportant un substrat (1), des pistes de guidage (2) formées sur ledit substrat (1) et des adresses (3) sur piste en forme de trous, s'étendant dans l'alignement des pistes de guidage (2) respectives, étant précisé que les adresses (3) sur piste en forme de trous sont formées en dehors des pistes de guidage (2), caractérisé par le fait que le dispositif de mémoire optique est un dispositif de mémoire magnéto-optique autorisant la réécriture et par le fait que la profondeur d des pistes de guidage (2) à partir de la surface du substrat (1) est dans la plage de $\lambda/24n$ à $\lambda/12n$ et que la profondeur des adresses (3) sur piste en forme de trous à partir de la surface du substrat (1) est dans la plage de $\lambda/8n$ à $\lambda/4n$, où $\lambda$ est la longueur d'onde du faisceau laser utilisé pour le dispositif de mémoire optique et n est l'indice de réfraction des portions formant piste de guidage et des portions formant adresse sur piste sur le substrat (1).

3. Dispositif de mémoire optique selon la revendication 1 ou 2, dans lequel la largeur h desdites pistes de guidage (2) est dans la plage de 0,5 $\lambda/NA$ à 0,7 $\lambda/NA$ où NA est l'ouverture numérique d'une lentille objectif prévue pour condenser le faisceau laser sur le dispositif de mémoire optique.

4. Dispositif de mémoire optique selon la revendication 1 ou 2, dans lequel la largeur h' desdites adresses (3) sur piste en forme de trous est dans la plage de 0,18 $\lambda/NA$ à 0.38 $\lambda/NA$ où NA est l'ouverture numérique d'une lentille objectif prévue pour condenser le faisceau laser sur le dispositif de mémoire optique.

**Ansprüche**

1. Optische Speichervorrichtung mit einem Substrat (1), auf dem Substrat geformten Führungsspuren (2) und lochförmigen Spuradressen (3), welche auf gleicher Linie mit denjenigen der Führungsspuren (2) verlaufen, wobei die lochförmigen Spuradressen (3) außerhalb der Führungsspuren (2) angeordnet sind und die Tiefe d der Führungsspuren (2) auf der Oberfläche des Substrats (1) gleich der Tiefe d' der

9

lochförmigen Spuradressen auf der Oberfläche des Substrats (1) ist, **dadurch gekennzeichnet**, daß die optische Speichervorrichtung ein magneto-optischer Schreib-/Lesespeicher ist und die Tiefe in einem Bereich zwischen $\lambda/24n$ und $\lambda/12n$ liegt, wobei $\lambda$ die Wellenlänge des in der optischen Speichervorrichtung verwendeten Laserlichts und n der Brechungsindex der Führungsspurenbereiche und der Spuradressenbereich auf dem Substrat (1) ist.

2. Optische Speichervorrichtung mit einem Substrat (1), auf dem Substrat geformten Führungsspuren (2) und lochförmigen Spuradressen (3), welche auf gleicher Linie mit denjenigen der Führungsspuren (2) verlaufen, wobei die lochförmigen Spuradressen (3) außerhalb der Führungsspuren (2) angeordnet sind, **dadurch gekennzeichnet**, daß die optische Speichervorrichtung ein magneto-optischer Schreib-/Lesespeicher ist und die Tiefe d der Führungsspuren (2) auf der Oberfläche des Substrats (1) in einem Bereich zwischen $\lambda/24n$ und $\lambda/12n$ und die Tiefe d' der lochförmigen Spuradressen (3) auf der Oberfläche des Substrats (1) in einem Bereich zwischen $\lambda/8n$ und $\lambda/4n$ liegt, wobei $\lambda$ die Wellenlänge des in der optischen Speichervorrichtung verwendeten Laserlichts und n der Brechungsindex der Führungsspurenbereiche und der Spuradressenbereiche auf dem Substrat (1) ist.

3. Optische Speichervorrichtung nach Anspruch 1 oder 2, wobei die Breite h der Führungsspuren (2) in einem Bereich zwischen $0,5 \ \lambda/NA$ und $0,7 \ \lambda/NA$ liegt, wobei NA die numerische Apertur einer Objektivlinse ist, die Laserlicht auf der optischen Speichervorrichtung bündeln soll.

4. Optische Speichervorrichtung nach Anspruch 1 oder 2, wobei die Breite h' der lochförmigen Spuradressen (3) in einem Bereich von $0,18 \ \lambda/NA$ bis $0,38 \ \lambda/NA$ liegt, wobei NA die numerische Apertur einer Objektivlinse ist, die Laserlicht auf der optischen Speichvorrichtung bündeln soll.

Fig.1

Fig.2

Fig.3

Fig.4

Fig.5

Fig.6

Fig.7(a)

Fig.7(b)

Fig.7(c)

$$D = I - \frac{HI}{I0} \qquad (d = \frac{\lambda}{8n})$$

WIDTH: h(μm)

Fig.8(a)

h=0.5 μm

0.6

0.7

0.8

0.9

$\frac{\lambda}{8n}$   $\frac{\lambda}{4n}$   DEPTH : d

Fig.8(b)

16

Ts $(d = \frac{\lambda}{8n})$

Ts — WIDTH : h ($\mu$m)

Fig.9(a)

Ts (h=0.65$\mu$m)

DEPTH : d

Fig.9(b)

Fig.10(a)

Fig.10(b)